(19) Europäisches Patentamt
European Patent Office
Office européen des brevets

(11) **EP 0 684 688 B1**

(12) **EUROPÄISCHE PATENTSCHRIFT**

(45) Veröffentlichungstag und Bekanntmachung des Hinweises auf die Patenterteilung:
**05.08.1998 Patentblatt 1998/32**

(51) Int Cl.[6]: **H02M 3/337**

(21) Anmeldenummer: **95201346.4**

(22) Anmeldetag: **23.05.1995**

(54) **Leistungsgenerator mit einem Transformator**

Power generator with a transformer

Générateur de puissance avec un transformateur

(84) Benannte Vertragsstaaten:
**DE FR GB**

(30) Priorität: **27.05.1994 DE 4418518**

(43) Veröffentlichungstag der Anmeldung:
**29.11.1995 Patentblatt 1995/48**

(73) Patentinhaber:
• **Philips Patentverwaltung GmbH**
  **22335 Hamburg (DE)**
  Benannte Vertragsstaaten:
  **DE**
• **Philips Electronics N.V.**
  **5621 BA Eindhoven (NL)**
  Benannte Vertragsstaaten:
  **FR GB**

(72) Erfinder:
• **Rohrbeck, Wolfgang, Prof. Dr.**
  **D-20097 Hamburg (DE)**
• **Negle, Hans**
  **D-20097 Hamburg (DE)**
• **Wimmer, Martin**
  **D-20097 Hamburg (DE)**

(74) Vertreter: **Hartmann, Heinrich, Dipl.-Ing. et al**
**Philips Patentverwaltung GmbH,**
**Röntgenstrasse 24**
**22335 Hamburg (DE)**

(56) Entgegenhaltungen:
• **IEEE TRANSACTIONS ON INDUSTRY APPLICATIONS, Bd. 28, Nr. 5, 1.September 1992 Seiten 1002-1008, XP 000311398 BHAT A K S 'FIXED-FREQUENCY PWM SERIES-PARALLEL RESONANT CONVERTER'**
• **PROCEEDINGS OF THE INTERNATIONAL SYMPOSIUM ON CIRCUITS AND SYSTEMS, SAN DIEGO, MAY 10 - 13, 1992, Bd. 4 OF 6, INSTITUTE OF ELECTRICAL AND ELECTRONICS ENGINEERS, Seiten 1883-1886, XP 000338361 BHAT A K S 'OPERATING MODES AND SIMULATION OF THE SERIES-PARALLEL RESONANT CONVERTER'**
• **ENERGY AND CONTROLS, NEW DELHI, AUG. 28 - 30, 1991, Bd. 1, 28.August 1991 INSTITUTE OF ELECTRICAL AND ELECTRONICS ENGINEERS, Seiten 217-221, XP 000313533 KIM H S ET AL 'A NEW ZERO VOLTAGE SWITCHING HIGH FREQUENCY DC-TO-DC CONVERTER'**
• **PROCEEDINGS OF THE ANNUAL POWER ELECTRONICS SPECIALISTS CONFERENCE (PESC), TOLEDO, JUNE 29 - JULY 3, 1992, Bd. 1, 29.Juni 1992 INSTITUTE OF ELECTRICAL AND ELECTRONICS ENGINEERS, Seiten 362-369, XP 000369050 YANG E X ET AL 'DYNAMIC ANALYSIS AND CONTROL DESIGN OF LCC RESONANT CONVERTER'**

EP 0 684 688 B1

## Beschreibung

Die Erfindung betrifft einen Leistungsgenerator gemäß dem Oberbegriff des Anspruchs 1. Als "Leistungsgenerator" wird ein Generator bezeichnet, der Leistungen verarbeiten kann, die in einem Röntgengenerator auftreten. Für die Heizstromversorgung werden dabei 50 W bis einige 100 W benötigt, während für die Hochspannungserzeugung - bei Spannungen zwischen 20 und 150 kV - Leistungen von 3 kW bis über 100 kW gefordert werden.

Ein derartiger Leistungsgenerator mit einem Transformator ohne ferromagnetischen Kern ist aus der EP-B2-141 985 bekannt. Er dient in einem Röntgengenerator zur Hochspannungserzeugung. Dabei ist die Primärwicklung in Reihe mit einer Gleichspannungsquelle und einer Schaltanordnung geschaltet, wobei der Primärwicklung oder der Schaltanordnung ein Kondensator parallel geschaltet ist. Die Schaltanordnung wird periodisch geöffnet und geschlossen, wobei in der Primärwicklung ein etwa sägezahnförmiger Strom entsteht. Um dabei die zur Last übertragene Leistung möglichst groß und die in die Gleichspannungsquelle rückgespeiste Energie möglichst klein zu halten, muß u.a. die Streuinduktivität möglichst klein sein bzw. es muß eine möglichst starke induktive Kopplung zwischen der Primärwicklung und der Sekundärwicklung bestehen. Diese Forderung ist bei einem Hochspannungstransformator ohne Eisenkern nur schwer zu erfüllen, weil sie voraussetzt, daß der Abstand zwischen Primär- und Sekundärwicklung möglichst klein ist; andererseits darf ein gewisser Mindest-Abstand zwischen diesen Komponenten nicht unterschritten werden, damit die Hochspannungsfestigkeit erhalten bleibt.

In der US-PS 3,596,167 ist darüberhinaus ein Hochspannungserzeuger für einen Röntgengenerator beschrieben, der mehrere in Kaskade geschaltete Transformatoren ohne (geschlossenen) Eisenkern umfaßt. Die Transformatoren sind über kapazitive Netzwerke miteinander gekoppelt. Diese Aufgabe einen Generator zu schaffen, der ebenfalls keinen ferromagnetischen Kern, zumindest aber keinen geschlossenen ferromagnetischen Kern benötigt, wird erfindungsgemäß durch die im Anspruch 1 angegebenen Maßnahmen gelöst.

Als Resonanzfrequenz des Parallel- bzw. Serienresonanzkreises wird dabei diejenige Frequenz bezeichnet, bei der der Parallel- bzw. Serienresonanzkreis für sich allein (d.h. ohne induktive Kopplung zwischen der Primärwicklung und der Sekundärwicklung) in Resonanz ist.- Die Erfindung basiert auf der Erkenntnis, daß der Transformator in Verbindung mit der angegebenen äußeren Beschaltung sich bei einer bestimmten Frequenz und in einem Bereich um diese Frequenz herum wie ein idealer Transformator verhält - auch wenn die induktive Kopplung zwischen Primär-und Sekundärwicklungsanordnung verhältnismäßig lose ist und die Impedanz der Wicklungsanordnung bei der erwähnten Frequenz nicht größer ist als der Widerstand der Last.

Es sei an dieser Stelle erwähnt, daß aus dem "Taschenbuch der Hochfrequenztechnik" von Meinke/Gundlach, 2. Auflage, Berlin 1962, Seiten 180/181 bereits eine Schaltung bekannt ist. bei der die Primärwicklung eines Übertragers durch einen Kondensator zu einem Serienresonanzkreis und die Sekundärwicklung des Übertragers durch einen weiteren Kondensator zu einem Parallelresonanzkreis ergänzt wird. Auch der dazu duale Fall (Primärwicklung als Parallelresonanzkreis, Sekundärwicklung als Serienresonanzkreis) ist aus dieser Veröffentlichung bekannt.

Diese Schaltungen dienen in der Hochfrequenztechnik zur Transformation eines Widerstandes in einen im Vergleich dazu hoch- bzw. niederohmigen Widerstand. Bei diesen nicht für die Übertragung größerer Leistung vorgesehenen Schaltungen sind der Parallelresonanzkreis und der Serienresonanzkreis jeweils auf dieselbe Frequenz abgestimmt. Die Resonanzkreise sollen durch den angeschlossenen Lastwiderstand nur schwach bedämpft werden.

Weiterhin ist aus einer Veröffentlichung von Kim et al in " The European Power Electronics Association ", Brighton, Juni 1993, bereits ein Leistungsgenerator mit einem Hochspannungstransformator bekannt, dessen Primärwicklung über einen Kondensator an eine Wechselspannungsquelle angeschlossen ist und dessen Sekundärwicklung wegen ihrer Eigenkapazitäten als Parallelresonanzkreis wirkt. Wie die Betriebsfrequenz der Wechselspannungsquelle, die Serienresonanzfrequenz und die Parallelresonanzfrequenz bei diesem Transformator mit ferromagnetischem Kern relativ zueinander liegen, ist nicht angegeben.

Eine bevorzugte Weiterbildung der Erfindung sieht vor, daß die Primär - Wicklungsanordnung Teil eines Serienresonanzkreises ist, der an die Wechselspannungsquelle angeschlossen ist, deren Innenwiderstand dem Betrage nach kleiner ist als die Impedanz der Primär-Wicklungsanordnung bei der Betriebsfrequenz, und daß die Sekundär-Wicklungsanordnung Teil eines Parallelresonanzkreises ist. Diese Ausgestaltung, bei der die Sekundärwicklung Bestandteil eines Parallelresonanzkreises ist, eignet sich insbesondere für die Hochspannungserzeugung in einem Röntgengenerator.

In weiterer Ausgestaltung der Erfindung ist vorgesehen, daß der Kopplungsfaktor der induktiven Kopplung zwischen der Primär-Wicklungsanordnung und der Sekundär-Wicklungsanordnung zwischen 0,1 und 0,9 vorzugsweise zwischen 0,2 und 0,8 liegt. Hierbei wird die Tatsache ausgenutzt, daß das Spannungs-Übersetzungsverhältnis bei dem erfindungsgemäßen Leistungsgenerator nicht nur vom Verhältnis der Induktivitäten der Sekundär- und der Primär-Wicklungsanordnung abhängt, sondern auch von dem Kopplungsfaktor. Je kleiner dieser Kopplungsfaktor ist, desto größer ist das Spannungs-Übersetzungsverhältnis und desto weniger Windungen benötigt die Sekundär-Wicklungsanordnung, um die primärseitige Wechselspannung auf eine bestimmte Hochspannung an der Sekundärseite zu transformieren. Ein weiterer Vorteil der vergleichsweise losen Kopplung besteht darin, daß die räumlichen Abstände zwischen Primär- und Sekundär-Wicklungsanordnung so gewählt werden können, daß sich die erforderliche Hochspannungsfestigkeit ergibt.

Allerdings ist der Kopplungsfaktor in der Praxis nach unten begrenzt, weil sich Bauelementetoleranzen mit abnehmendem Kopplungsfaktor immer stärker auf das Übertragungsverhalten der Schaltung auswirken. Aus diesem Grunde sollte der Kopplungsfaktor mindestens 0,1 - vorzugsweise mindestens 0,2 betragen.

Eine Weiterbildung der Erfindung sieht vor, daß die Kennimpedanz des Parallelresonanzkreises in der Größenordnung des Lastwiderstandes oder größer ist. Das optimale Verhältnis der Kennimpedanz des Parallelresonanzkreises zu dem Widerstand der Last hängt von dem Kopplungsfaktor zwischen Primär- und Sekundär-Wicklungsanordnung ab; bei einem Koppelfaktor von 0,1 sollte der Lastwiderstand rund siebenmal so groß sein wie die Kennimpedanz und bei einem Koppelfaktor von 0,9 sollte der Lastwiderstand etwa ein Drittel der Kennimpedanz betragen. Durch diese Bemessung wird erreicht, daß die Anordnung sich auch dann noch zumindest näherungsweise wie ein idealer Transformator verhält, wenn die Betriebsfrequenz nicht exakt den für dieses Verhalten erforderlichen Wert hat oder wenn die Serienresonanzfrequenz bzw. die Parallelresonanzfrequenz nicht exakt ihren Sollwert haben. Dadurch können auch Bauelementetoleranzen bzw. Fertigungsstreuungen aufgefangen werden.

Eine für die Hochspannungserzeugung wichtige Weiterbildung sieht vor, daß die Betriebsfrequenz der Eigenresonanzfrequenz der Sekundär-Wicklungsanordnung entspricht. In diesem Fall schwingt die Sekundär-Wicklungsanordnung auf der durch ihre Eigenkapazitäten (Wicklungskapazitäten u. dergl.) vorgegebenen Resonanzfrequenz, und ein zur Sekundärwicklung parallelgeschalteter, teurer Hochspannungskondensator entfällt.

Allerdings läßt sich die Parallelresonanzfrequenz einer Sekundär-Wicklungsanordnung nicht ohne weiteres auf den für den Betrieb des Leistungsgenerators optimalen Wert bringen. Um trotzdem ohne einen zusätzlichen Hochspannungskondensator auskommen zu können, sieht eine Weiterbildung der Erfindung vor, daß ein zusätzlicher, mit der Sekundär-Wicklungsanordnung induktiv gekoppelter Parallelresonanzkreis vorgesehen ist, der so bemessen ist, daß die Sekundär-Wicklungsanordnung bei der Betriebsfrequenz eine Parallelresonanz aufweist. Hierfür ist zwar auch ein Kondensator erforderlich sowie eine zusätzliche Induktivität, doch muß der Kondensator nicht für Hochspannung ausgelegt sein, sondern für eine durch die Induktivität der zusätzlichen Wicklung vorgegebene niedrigere Spannung, so daß auch dadurch der Aufwand verringert werden kann.

In weiterer Ausgestaltung der Erfindung ist vorgesehen, daß die zusätzliche Wicklung durch eine Folie gebildet wird, die an einem Punkt geerdet ist und die um eine Wicklungsanordnung gewickelt ist und diese elektrostatisch gegenüber der anderen Wicklungsanordnung abschirmt. Die zusätzliche Wicklung hat dabei also eine Doppelfunktion. Sie dient einerseits der Abstimmung des Parallelresonanzkreises auf die erforderliche Frequenz und andererseits der elektrostatischen Abschirmung zwischen Primär- und SekundärWicklungsanordnung.

Nach dem Dualitätsprinzip können analoge Ergebnisse dadurch erreicht werden, daß die Primär-Wicklungsanordnung an einen Wechselstromerzeuger angeschlossen ist und zu einem Parallelresonanzkreis ergänzt ist, daß die Sekundär-Wicklungsanordnung Teil eines Serienresonanzkreises ist, dessen Kennwiderstand wesentlich größer ist als der Widerstand der daran angeschlossenen Last. Hierbei muß der Parallelresonanzkreis von einer Wechselstromquelle mit großem Innenwiderstand gespeist werden und die Last muß niederohmig sein. Diese Ausgestaltung ist für die Erzeugung von Hochspannungen weniger geeignet, kann aber beispielsweise zur Speisung des (niederohmigen) Heizfadens einer Röntgenröhre benutzt werden.

Die Erfindung wird nachstehend anhand der Zeichnungen näher erläutert. Es zeigen:

Fig. 1 ein Prinzipschaltbild eines erfindungsgemäßen Leistungsgenerators,

Fig. 2 die Frequenzabhängigkeit der Ausgangsspannung für verschiedene Lastwiderstände,

Fig. 3 einen erfindungsgmäßen Hochspannungserzeuger für eine Röntgenröhre,

Fig. 4 den Wicklungsaufbau des dabei verwendeten Transformators in schematischer Darstellung.

Fig. 5 ein Prinzipschaltbild einer zu Fig. 1 dualen Ausführungsform.

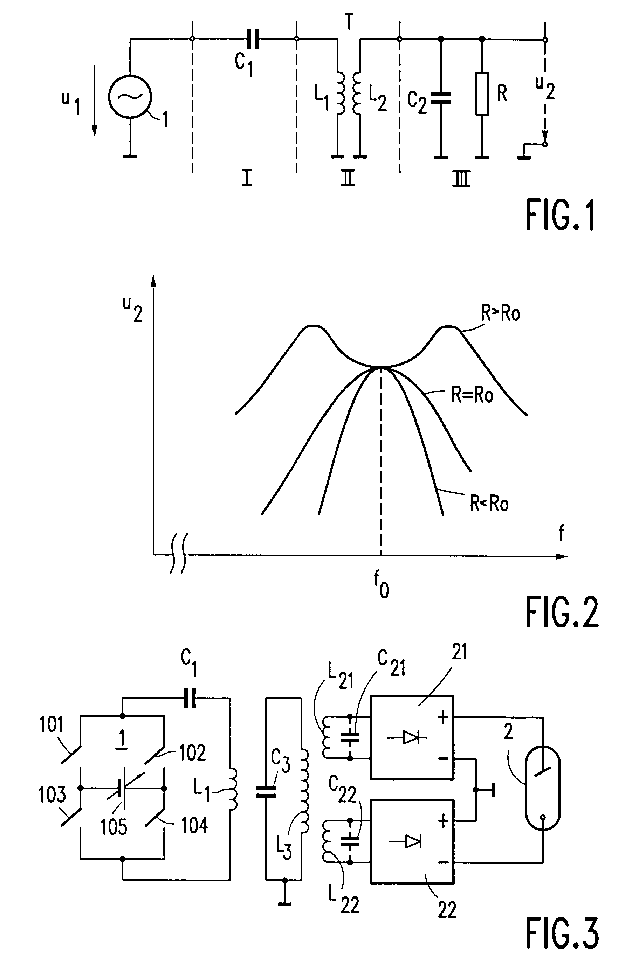

Gemäß Fig. 1 wird die Serienschaltung eines Kondensators $C_1$ und der Primärwicklung $L_1$ eines Transformators T von einer Wechselspannungsquelle 1 gespeist, deren Innenwiderstand vernachlässigbar klein gegenüber der Kennimpedanz des durch $L_1$ und $C_1$ gebildeten Serienresonanzkreises ist (die Kennimpedanz ist die Quadratwurzel aus dem Quotienten $L_1/C_1$) und die eine sinusförmigen Wechselstrom durch $L_1$ mit der Frequenz $\omega$ erzeugt. Der Sekundärwicklung $L_2$ des Transformators T ist ein Kondensator $C_2$ parallelgeschaltet, so daß sich ein Parallelresonanzkreis ergibt. Weiterhin ist der Wicklung $L_2$ ein Widerstand R parallelgeschaltet, der die Last der Schaltung darstellt.

Da der Lastwiderstand R bereits in die Schaltung einbezogen ist, wird bei der nachfolgenden Berechnung der Ausgangsspannung $u_2$ an den Ausgangsklemmen davon ausgegangen, daß die Schaltung im Leerlauf betrieben wird, d.h. daß über die Ausgangsklemmen kein Strom fließt. Bei dieser Berechnung wird der die induktive Kopplung zwischen den Wicklungen $L_1$ und $L_2$ beschreibende Kopplungsfaktor mit k bezeichnet. Dafür gilt die Gleichung

$$k^2 = M^2/(L_1 L_2) \tag{1}$$

Dabei ist M die Gegeninduktivität zwischen den beiden Wicklungen $L_1$ und $L_2$, und $L_1$ bzw. $L_2$ stellen die Induktivitäten der Primärwicklung $L_1$ bzw. der Sekundärwicklung $L_2$ dar. Für das Verhältnis zwischen diesen Induktivitäten gilt die Gleichung

$$t^2 = L_2/L_1 \tag{2}$$

t ist für einen Hochspannungserzeuger groß gegenüber 1.

Für die Berechnung wird die Schaltung in drei Abschnitte unterteilt, wobei der erste Abschnitt I die Kapazität $C_1$ im Längszweig umfaßt, der zweite Abschnitt II den Transformator T und der dritte Abschnitt III die Parallelschaltung des Kondensators $C_2$ und des Lastwiderstandes R.

Die drei Abschnitte werden als Vierpol betrachtet, dessen Kettenmatrix der Berechnung des Übertragungsverhaltens zugrundegelegt wird. Eine Kettenmatrix beschreibt bekanntlich den Zusammenhang zwischen der Spannung $u_i$ und dem Strom $i_i$ am Eingang des Vierpols und der Spannung $u_o$ und dem Strom $i_o$ an seinem Ausgang durch die Gleichungen

$$u_i = a_{11}\, u_o + a_{12}\, i_o \tag{3}$$

$$i_i = a_{21}\, u_o + a_{22}\, i_o \tag{4}$$

Die Koeffizienten $a_{11}$ ... $a_{22}$ stellen die Elemente einer Kettenmatrix A dar. Dabei bestimmt $a_{11}$ die Spannungsübersetzung und $a_{11}/a_{21}$ den Eingangswiderstand des Vierpols bei ausgangsseitigem Leerlauf ($i_0 = 0$). Bekanntlich ergibt sich die Kettenmatrix mehrerer in Kaskade geschalteter Vierpole aus dem Produkt der Kettenmatrizen der einzelnen Vierpole.

Somit gilt für die Kettenmatrix $A_g$ des zwischen der Spannungsquelle 1 und den Ausgangsklemmen 2 der Fig. 1 befindlichen Gesamtvierpols die Gleichung

$$A_g = A_I \bullet A_{II} \bullet A_{III} \tag{5}$$

Dabei sind $A_I$, $A_{II}$ und $A_{III}$ die Kettenmatrizen der Vierpole in den Abschnitten I, II und III.

Das für die Erfindung wesentliche Verhalten der Schaltung ergibt sich, wenn der Kreis $L_2$, $C_2$ seine Parallelresonanz bei der Frequenz $\omega$ (genauer: bei der Kreisfrequenz $\omega$; für den Zusammenhang zwischen Kreisfrequenz $\omega$ und Frequenz f gilt bekanntlich $\omega = 2\pi f$) der von der Wechselspannungsquelle gelieferten Spannung $u_1$ hat und wenn die Serienresonanzfrequenz des Kreises $L_1$, $C_1$ um den Faktor $\sqrt{(1-k^2)}$ kleiner ist als die Resonanzfrequenz des Parallelresonanzkreises $L_2$, $C_2$. Dem entsprechen die Gleichungen

$$\omega^2 L_1 C_1 (1 - k^2) = 1 \tag{6}$$

$$\omega^2 L_2 C_2 = \omega^2 t^2 L_1 C_2 = 1 \tag{7}$$

Wenn der Transformator mehrere Sekundärwicklungen umfaßt, können sich mehrere Parallelresonanzen ergeben. Dann bezieht sich das oben Gesagte auf die niedrigste Parallelresonanzfrequenz. Entsprechendes gilt, wenn eine aus mehreren Teilwicklungen bestehende Primär-Wicklungsanordnung vorhanden ist.

Multipliziert man die drei Kettenmatrizen entsprechend Gleichung (5) miteinander, dann ergibt sich für die Schaltung nach Fig 1 bei der durch die Gleichungen (6) und (7) definierte Betriebsfrequenz die folgende Kettenmatrix:

$$A_g = \begin{pmatrix} \dfrac{k}{t} & 0 \\[2mm] \dfrac{t}{kR} & \dfrac{t}{k} \end{pmatrix} \qquad\qquad (8)$$

Diese Matrix entspricht der Matrix eines ausgangsseitig durch einen Lastwiderstand R belasteten idealen Transformators. Ein idealer Transformator überträgt die Leistung verlustlos, und er hat eine unendlich hohe Leerlauf-Eingangsimpedanz und keine Streuung (k = 1). Die Schaltung nach Fig. 1 unterscheidet sich von diesem idealen Transformator lediglich dadurch, daß dieses Verhalten nur für eine einzige, durch die Gleichungen (6) und (7) definierte Betriebsfrequenz exakt gegeben ist, und das Spannungsübersetzungsverhältnis nicht durch t allein, sondern durch t/k gegeben ist.

Dieses Verhalten der Schaltung nach Fig. 1 ergibt sich auch bei einer relativ großen Streuung bzw. einer relativ losen Kopplung zwischen Primär-und Sekundärwicklung, und auch dann, wenn der Wechselstromwiderstand der Sekundärwicklung in der Größenordnung des Lastwiderstandes ist oder noch kleiner. Ein Hochspannungserzeuger für eine Röntgenröhre kann daher mit einem (Luft-) Transformator realisiert werden, dessen Sekundärwicklung eine Induktivität von einigen Zehntel bzw. einigen Henry hat - bei einer vergleichsweise niedrigen Betriebsfrequenz (20 bis 50 kHz, bei denen sich Wechselspannungsquellen mit den heute verfügbaren Leistungshalbleitern ohne weiteres realisieren lassen). Ein reeller Lastwiderstand R stellt eine rein reelle Belastung des Wechselspannungserzugers 1 dar, wobei das Widerstandsübersetzungsverhältnis durch den Faktor $t^2/k^2$ gegeben ist.

Die Tatsache, daß das Spannungs-Übersetzungsverhältnis durch den Faktor t/k gegeben ist, bedeutet, daß zur Erzielung einer bestimmten Ausgangsspannung 2 bei vorgegebener Spannung $u_1$ die Sekundärinduktivität um den Faktor k kleiner sein kann als bei einem streuungsfreien Transformator (k = 1). Dies ist für einen Röntgengenerator, z.B. in einem Hochspannungserzeuger, der eine Spannung von einigen hundert Volt in eine Spannung von z.B. 150 kV transformieren kann, von doppeltem Vorteil: Zum einen kann dadurch eine Sekundärwicklung mit weniger Windungen benutzt werden und zum anderen kann der Abstand zwischen Primärwicklung und Sekundärwicklung so groß gemacht werden, wie es aus Gründen der Hochspannungfestigkeit erforderlich ist, ohne daß die dadurch verringerte induktive Kopplung zwischen Primär- und Sekundärwicklung des Transformators sich negativ auswirkt.

Die Gleichung (8) für die Kettenmatrix des Gesamtvierpols ist unter der Voraussetzung abgeleitet worden, daß die Induktivitäten $L_1$, $L_2$ und die Kondensatoren $C_1$, $C_2$ verlustfreie Bauelemente sind und daß der Innenwiderstand der Wechselspannungsquelle Null ist, d.h, daß der Serien- bzw. der Parallelresonanzkreis eine unendliche hohe Güte haben. Jedoch gilt das durch Gleichung (8) beschriebene Übertragungsverhalten in guter Näherung auch dann noch, wenn der Serien- und der Parallelresonanzkreis eine ausreichend hohe Güte haben, z.B. eine Güte größer als 20, vorzugsweise größer als 50. Eine weitere Voraussetzung ist, daß der in dem Primärkreis mit dem Faktor $k^2/t^2$ transformierte Lastwiderstand R groß ist im Vergleich zu dem die ohm'schen Verluste im Serienresonanzkreis repräsentierenden Verlustwiderstand und daß der durch die ohm'schen Verluste im Sekundärkreis parallel zu $L_2$ und $C_2$ wirksame Verlustwiderstand klein ist im Vergleich zum Lastwiderstand R.

Die Gleichung (8) für die Matrix $A_g$ gilt nur für die durch die Gleichungen (6) und (7) definiert Kreisfrequenz $\omega$ exakt. Oberhalb und unterhalb von diesem Wert $\omega$ gehen die reellen Werte der Matrixelemente der Matrix $A_g$ in komplexe und frequenzabhängige Werte über. Das bedeutet, daß eine Phasenverschiebung zwischen Eingangsstrom und Eingangsspannung auftritt bzw. daß Blindströme fließen. Das durch Gleichung (8) definierte Übertragungsverhalten gilt jedoch auch noch in einem gewissen Bereich um die durch die Gleichungen (6) und (7) definierte Frequenz herum. Es wurde gefunden, daß der Frequenzbereich, in dem die abgeleitete Beziehung noch mit hinreichender Genauigkeit gilt, von dem Verhältnis zwischen dem Lastwiderstand R und der Kennimpedanz Z des Parallelresonanzkreises $L_2$, $C_2$ abhängt; die Kennimpedanz entspricht der Quadratwurzel aus dem Quotienten $L_2/C_2$.

In Fig. 2 ist die Ausgangsspannung $u_2$ als Funktion der Frequenz f der vom Wechselspannungserzeuger 1 gelieferten Wechselspannung $u_1$ dargestellt. Die aus den Gleichungen 6 und 7 abgeleitete Frequenz ist mit $f_0$ bezeichnet. Es sind drei verschiedene Kurven mit dem Lastwiderstand R als Parameter dargestellt. Für einen Belastungswiderstand R = $R_o$ ergibt sich eine flache Kurve, wobei für diesen Widerstand die Beziehung gilt:

$$R_o = Z \times \frac{\sqrt{(1-k^2)/2}}{k} \qquad\qquad (9)$$

Wenn man stattdessen einen Lastwiderstand verwendet, de größer ist als $R_o$, dann hat die Ausgangsspannung

$u_2$ bei der Frequenz $f_0$ ein relatives Minimum und beiderseits der durch Gleichung 1 vorgegebenen Frequenz $f_0$ ein Maximum. Bei einem kleineren Widerstand R ergibt sich ein Kurvenverlauf, der schmalbandiger ist als für R = $R_o$ .

Die Bandbreite der Übertragungskurve für einen Lastwwiderstand R = Ro hängt vom Kopplungsfaktor k ab; die Bandbreite ist umso größer, je größer k ist. Für die 3dB-Grenzfrequenzen $f_{1,2}$ gilt:

$$\frac{f_{1,2}}{f_0} = \pm \sqrt{1+v^2} \pm v \qquad mit\ v = \frac{k}{2\sqrt{1-k^2}} \qquad\qquad (10)$$

Da somit die Schaltung nach Fig. 1 sich innerhalb einer gewissen Bandbreite um die Frequenz $f_0$ nahezu wie ein idealer Transformator verhält, kommt es in der Praxis nicht darauf an, daß die Gleichungen (6) und (7) exakt eingehalten werden. Das bedeutet, daß auch dann das gewünschte Verhalten erreicht wird, wenn die Betriebsfrequenz in einem gewissen Bereich oberhalb oder unterhalb des Wertes $f_0$ liegt, d.h. zwischen den 3dB-Grenzfrequenzen $f_1$ und $f_2$. Das gleiche gilt, wenn die Resonanzfrequenzen des Serienresonanzkreises bzw. des Parallelresonanzkreises nicht exakt den durch die Gleichung (6) bzw. (7) vorgegebenen Wert haben. Es wurde gefunden, daß die zulässigen Frequenzabweichungen etwa 5% betragen können, ohne daß sich eine merkliche Abweichung von dem gewünschten Verhalten ergibt. Dies gilt für Kopplungsfaktoren zwischen 0,1 und 0,9 - insbesondere zwischen 0,2 und 0,8. Somit ist die Schaltung unempfindlich gegenüber Fertigungstoleranzen bzw. Bauelementestreuungen. Es können deshalb auch zum Beispiel Kondensatoren $C_1$ und $C_2$ verwendet werden, deren Kapazität nicht exakt den aus den Gleichungen (6) und (7) errechneten Wert hat, sondern einen handelsüblichen Wert.

In Fig. 3 ist als Ausführungsbeispiel der Erfindung die Hochspannungserzeugung für eine Röntgenröhre 3 dargestellt. Wie in Fig. 1 ist eine Wechselspannungsquelle 1 an die Serienschaltung eines Kondensators $C_1$ und eine Primärwicklung $L_1$ eines Transformators angeschlossen. Allerdings besteht die Wechselspannungsquelle aus einer einstellbaren Gleichspannungsquelle 105 und einem Wechselrichter mit den Schaltern 101 . . . 104, der die Gleichspannungsquelle 105 in der einen Halbperiode einer periodischen Schwingung mit der einen Polarität an die Serienschaltung $L_1$, $C_1$ anschließt und in der anderen Halbperiode mit der entgegengesetzten Polarität. Somit ist an der Serienschaltung zwar eine Rechteckspannung wirksam, jedoch hat der Strom durch die Induktivität $L_1$ einen nahezu sinusförmigen Verlauf, weil die Schalter 101 . . . 104 im Takte der Parallelresonanzfrequenz des aus $L_2$ und $C_2$ bestehenden Schwingkreises geschaltet werden. Die im Spektrum der Rechteckspannung enthaltenen ungeradzahligen Harmonischen der Parallelresonanzfrequenz werden im wesentlichen unterdrückt.

Die Primärwicklung $L_1$ ist induktiv - aber ohne ferromagnetischen Kern - mit den beiden Sekundärwicklungen $L_{21}$ und $L_{22}$ des Hochspannungstransformators gekoppelt. Die (parasitären) Wicklungskapazitäten $C_{21}$ und $C_{22}$ sind - gestrichelt - parallel zu diesen Wicklungen dargestellt. Die Hochspannung an der Sekundärwicklung $L_{21}$ wird von einem Gleichrichter 21 gleichgerichtet, dessen positiver Ausgang mit der Anode der Röntgenröhre 3 und dessen negativer Ausgang mit dem positiven Ausgang eines Gleichrichters 22 verbunden ist, dessen negativer Ausgang mit der Kathode der Röntgenröhre 3 verbunden ist, und dessen Eingang an die Sekundärwicklung $L_{22}$ angeschlossen ist. Die Sekundärwicklungen $L_{21}$ und $L_{22}$ sind somit über einen Teil der Gleichrichterbauelemente in Serie geschaltet. Die Röntgenröhre wird an unterschiedlichen Spannungen U betrieben, beispielsweise im Bereich zwischen 40 kV und 150 kV. Dazu wird die von der Gleichspannungsquelle 105 gelieferte Gleichspannung - vorzugsweise elektronisch - eingestellt.

Für die Sekundärwicklungen wirkt die Röntgenröhre in Verbindung mit den Gleichrichtern 21 und 22 wie ein Widerstand R der Größe R = gU/I, wobei g ein Faktor ist, der davon abhängt, ob die Röhrenspannung geglättet wird oder nicht. Bei einer Glättung der Spannung ist g = 1/2. Bei einer Röntgenaufnahme können Röhrenströme I zwischen z. B. 10mA und 1A vorgegeben sein. Bei Durchleuchtungen können die Röhrenströme noch geringer sein. Somit kann R in einem sehr breiten Bereich variieren. Es ist deshalb zweckmäßig, die Anpassung zwischen der (variablen) Last und der Kennimpedanz Z entsprechend Gleichung (12) für einen Arbeitspunkt im oberen Leistungsbereich der Röntgenröhre zu wählen.

Wenn die Sekundärwicklungen $L_{21}$ und $L_{22}$ miteinander nicht induktiv gekoppelt wären, dann wäre - bei gleichen Daten der Wicklungen $L_{21}$, $L_{22}$ - die Parallelresonanzfrequenz durch die Größe einer der Induktivitäten $L_{21}$ bzw. $L_{22}$ und die parallel dazu wirksame Kapazität vorgegeben. In der Regel besteht jedoch zwischen den Sekundärwicklungen eine induktive Kopplung. Dadurch kann die Gesamtinduktivität des Sekundärkreises größer werden als die Summe der beiden Induktivitäten $L_{21}$ und $L_{22}$, und der Kopplungsfaktor zwischen der Primärinduktivität $L_1$ und der Gesamtinduktivität kann größer sein als der Kopplungsfaktor zwischen $L_1$ und $L_{21}$ bzw. $L_1$ und $L_{22}$ allein. Für die Bestimmung der Serienresonanzfrequenz nach Gleichung (6) ist dann der Kopplungsfaktor k zwischen der Primärinduktivität $L_1$ und der Gesamtinduktivität maßgeblich, und die Gesamtinduktivität des Sekundärkreises stellt den für die Bestimmung der Kennimpedanz Z maßgeblichen Wert $L_2$ dar. Der zugehörige Wert von $C_2$ ergibt durch Messung der Parallelresonanzfrequenz bzw durch Berechnung der Kapazität der Sekundärwicklungs-Anordnung aus der Serienschaltung der parallel zu den Sekundärwicklungen wirksamen Kapazitäten.

Das Spannungsübersetzungsverhältnis t/k ist umso größer, je kleiner der Kopplungsfaktor k ist, und deshalb kann die Windungszahl der Sekundärwicklungen $L_{21}$ und $L_{22}$ (bei vorgegebener Primärinduktivität $L_1$) bei einem kleinen Wert von k kleiner sein als bei einem großen Wert. Der Wert k kann jedoch nicht beliebig klein gewählt werden, weil mit sinkendem k die Bandbreite kleiner wird, innerhalb derer die Schaltung wie ein idealer Transformator wirkt. In der Praxis sollte daher Kopplungsfaktor k zwischen Primär- und Sekundärwicklung des Hochspannungstransformators mindestens einen Wert k = 0,1 haben, vorzugsweise mindestens 0,2. Es kommt hinzu, daß mit sinkendem k die magnetischen Streufelder des Hochspannungstransformators und damit der Anteil der elektrischen Leistung, der induktiv in die umgebenden Metallteile eingekoppelt wird, beispielsweise in das in Fig. 3 nicht dargestellte Metallgehäuse des Hochspannungstransformators, anstatt in die Sekundärwicklung.

In der Praxis ist es nicht ohne weiteres möglich, die Sekundärwicklungen so aufzubauen, daß die Gleichung (7) allein mit Hilfe der Wicklungskapazitäten der Wicklungsanordnung $L_{21}$, L22 erfüllt wird. Man kann den Sekundlärwicklungen zwar einen geeignet gewählten Kondensator parallelschalten, jedoch ist ein solcher Kondensator teuer, weil er für Hochspannung ausgelegt sein muß. Um die Sekundärwicklugen $L_{21}$ und $L_{22}$ auf die durch die Gleichung (7) vorgegebene Parallelresonanzfrequenz abzustimmen, ist daher ein zusätzlicher Parallelresonanzkreis mit einer Induktivität $L_3$ und einem Kondensator $C_3$ vorgesehen. Die Induktivität $L_3$ ist dabei so angeordnet, daß sie gegenüber den Sekundärwicklungen gleich große Kopplungsfaktoren aufweist und daß sich mit der Primärwicklung vorzugsweise ein geringerer Kopplungsfaktor ergibt. Die Kapazität des Kondensators $C_3$ ist so gewählt, daß sich unter diesen Verhältnissen bei der Betriebsfrequenz des Wechselrichters eine Parallelresonanz ergibt. Es wurde gefunden, daß die gesamte Anordnung in erster Näherung einer Parallelschaltung eines zusätzlichen sekundären Resonanzkreises entspricht, dessen Kapazität die galvanisch mit der Last gekoppelte Kapazität ergänzt. Das L/C - Verhältnis des zusätzlichen Kreises hat keinen Einfluß auf die Funktion der Anordnung, bestimmt aber die Größe der in diesem Kreis auftretenden Ströme und Spannungen.

Die Induktivität $L_3$ kann dabei so ausgelegt werden, daß sie zusätzlich die Funktion eines bei Röntgengeneratoren für die medizinische Diagnostik vorgeschriebenen elektrostatischen Schutzschirms übernimmt. Dieser zwischen der Primärwicklung und den Sekundärwicklungen angeordnete Schutzschirm ist geerdet und hat die Aufgabe, Überschläge zwischen Primär- und Sekundär-Wicklungsanordnung zu unterbinden.

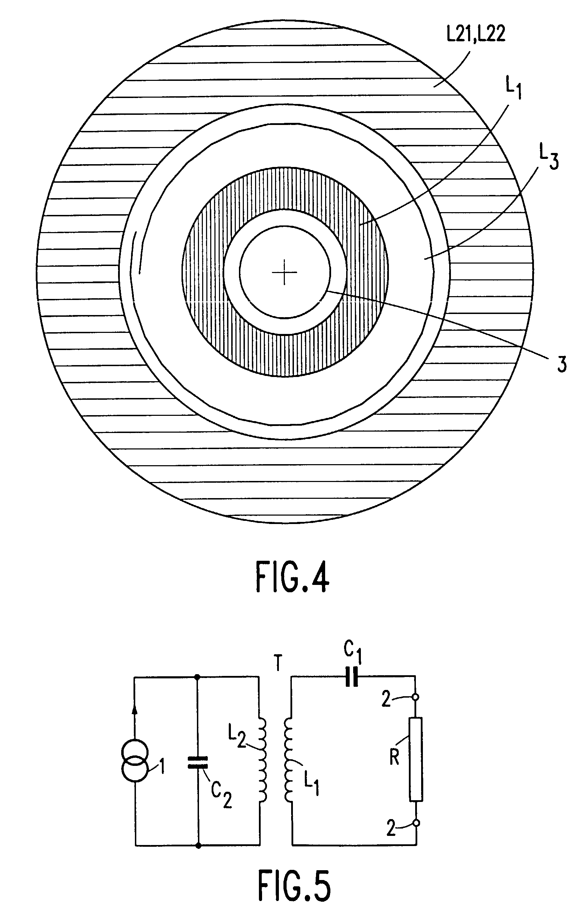

Fig. 4 zeigt einen Querschnitt eines hierfür geeigneten Hochspannungstransformators, wobei der Einfachheit halber die Isolierkörper, auf die die Wicklungen aufgewickelt sind, nicht dargestellt sind, sondern lediglich die Kupferquerschnitte der Wicklungen. Die Wicklung $L_1$ hat die Form eines zur Zeichenebene der Fig. 4 senkrechten Zylinders. Die Sekundärwicklungen $L_{21}$ und $L_{22}$, deren Innendurchmesser deutlich größer ist als der Außendurchmesser der Primärwicklung $L_1$, sind zu dieser koaxiai und gegeneinander in axialer Richtung versetzt angeordnet. In dem Zwischenraum zwischen der Primärwicklung $L_1$ und den Sekundärwicklungen $L_{21}$ und $L_{22}$ befindet sich eine geerdete Kupferfolie $L_3$, die die Primärwicklung über ihre gesamte Länge umschließt und somit die Primär- und die Sekundärwicklungen elektrostatisch voneinander abschirmt. Die Kupferfolie ist in mehreren Windungen (die schematische Darstellung der Figur zeigt nur eine) um die Symmetrieachse der Anordnung gewickelt, so daß sich eine Induktivität $L_3$ ergibt, die in Verbindung mit dem Kondensator $C_3$ einen Parallelresonanzkreis bildet. Der Abstand der durch die Folie gebildeten Induktivität $L_3$ vom inneren Umfang der Sekundärwicklung $L_{21}$, $L_{22}$ ist dabei kleiner als der Abstand vom äußeren Umfang der Primärwicklung $L_1$, so daß der Kopplungsfaktor zwischen $L_3$ und den Sekundärwicklungen größer ist als zwischen $L_3$ und der Primärwicklung; der Abstand zwischen $L_3$ und den Sekundärwicklungen ist aber genügend groß, um die erforderliche Hochspannungsfestigkeit zu gewährleisten.

Bei dem vorstehend beschriebenen Ausführungsbeispiel hatte der Transformator keinerlei ferromagnetischen Kern. Die Erfindung ist aber auch bei Transformatoren mit einem nicht geschlossenen ferromagnetischen Kern, vorzugsweise aus einem Ferritmaterial, anwendbar. Geschlossene Ferritkerne in der Größe, wie sie für den Hochspannungstransformator eines Röntgengenerators erforderlich wären, sind derzeit nämlich praktisch nicht zu realisieren. Hingegen läßt sich ein Transformator, der einen stabförmigen Ferritkern oder mehrere solcher Kerne umfaßt, ohne weiteres realisieren.

Anstatt durch einen zusätzlichen Parallelresonanzkreis kann die Abstimmung auf die Betriebsfrequenz ω auch durch einen Ferritkörper 3 mit (relativ zu den achsialen Abmessungen der Primärwicklung) geringen Abmessungen erfolgen, der in einer bestimmten Lage bezüglich der Sekundärwicklung angeordnet ist, z.B. im Innern der Primärwicklung - wie in Fig 4 gestrichelt angedeutet. Die dadurch ebenfalls bewirkte Änderung des Kopplungsfaktors k und der Primärinduktivität L1 kann durch Änderung des Induktivitäts-Übersetzungsverhältnisses t (Änderung der Primärwindungszahl) ausgeglichen werden.

Bei dem beschriebenen Ausführungsbeispiel ist primär ein Serienresonanzkreis vorgesehen. Es ist jedoch unter Ausnutzung des Dualitätsprinzips möglich, primär einen Parallelresonanzkreis und sekundär einen Serienresonanzkreis vorzusehen, wie in Fig. 5 dargestellt, wobei für die Serien- und Parallelresonanzfrequenz die Gleichungen (6) und (7) gelten müssen. In diesem Fall muß statt einer Wechselspannungsquelle eine hochohmige Wechselstromquelle 1 vorgesehen sein, und als Last ist ein Widerstand R erforderlich, der klein ist im Vergleich zur Kennimpedanz des Serienresonanzkreises $L_2$, $C_2$. Damit vertauscht die Schaltungsanordnung ihre Eigenschaften bezüglich der Spannungen, Ströme und Übersetzungsverhältnisse, und die speziellen Vorteile zur Transformierung von Spannungen gelten für die Stromübertragung. Diese Ausgestaltung der Erfindung eignet sich beispielsweise für die Speisung eines Heizfadens einer Röntgenröhre. Bei einem für diese Zwecke eingesetzten Transformators kommt es nicht auf ein großes Übersetzungsverhältnis an, jedoch ebenfalls auf eine große Hochspannungsfestigkeit, weil die mit der Kathode gekoppelte Sekundärwicklung einem negativen Hochspannungspotential ausgesetzt ist, das der Hälfte der Spannung an der Röntgenröhre entspricht und weil die Primärwicklung dabei in der Regel Erdpotential führt.

**Patentansprüche**

1. Leistungsgenerator mit einem Transformator (T) mit einer Primär-Wicklungsanordnung ($L_1$) und einer damit induktiv gekoppelten Sekundär-Wicklungsanordnung ($L_2$), wobei die Primär-Wicklungsanordnung zusammen mit einem Kondensator einen Resonanzkreis bildet, wobei an die Sekundär-Wicklungsanordnung eine Last R angeschlossen ist, wobei eine Wicklungsanordnung ($L_1$) des Transformators Teil eines Serienresonanzkreises ist und wobei die andere Wicklungsanordnung ($L_2$) Teil eines Parallelresonanzkreises ist
   dadurch gekennzeichnet,

   a) daß die Resonanzfrequenz des Serienresonanzkreises ($L_1$, $C_1$) niedriger ist als die Resonanzfrequenz des Parallelresonanzkreises ($L_2$, $C_2$) und
   b) daß der mit der Primär-Wicklungsanordnung ($L_1$) gebildete Resonanzkreis an eine Wechselspannungsquelle (1) angeschlossen ist, die einen im wesentlichen sinusförmigen Wechselstrom durch die Primär-Wicklungsanordnung mit einer Betriebsfrequenz im Bereich der Resonanz des Parallelresonanzkreises erzeugt.

2. Leistungsgenerator nach Anspruch 1,
   dadurch gekennzeichnet, daß die Primär-Wicklungsanordnung ($L_1$) Teil eines Serienresonanzkreises ($L_1$, $C_1$) ist, der an die Wechselspannungsquelle (1) angeschlossen ist, deren Innenwiderstand dem Betrage nach kleiner ist als die Impedanz der Primär-Wicklungsanordnung bei der Betriebsfrequenz, und daß die Sekundär-Wicklungsanordnung ($L_2$) Teil eines Parallelresonanzkreises ist

3. Leistungsgenerator nach Anspruch 2 oder 3,
   dadurch gekennzeichnet, daß der Kopplungsfaktor der magnetischen Kopplung zwischen der Primär-Wicklungsanordnung und der Sekundär-Wicklungsanordnung zwischen 0,1 und 0,9 vorzugsweise zwischen 0,2 und 0,8 liegt.

4. Leistungsgenerator nach einem der Ansprüche 2 oder 3,
   dadurch gekennzeichnet, daß die Kennimpedanz Z des Parallelresonanzkreises ($L_2$, $C_2$) in der Größenordnung des Lastwiderstandes R oder größer ist.

5. Leistungsgenerator nach einem der Ansprüche 2 bis 4,
   dadurch gekennzeichnet, daß die Sekundär-Wicklungsanordnung mehrere in Serie geschaltete Teilwicklungen ($L_{21}$, $L_{22}$) umfaßt.

6. Leistungsgenerator nach Anspruch 5,
   dadurch gekennzeichnet, daß die Teilwicklungen magnetisch miteinander gekoppelt sind.

7. Leistungsgenerator nach einem der Ansprüche 2 oder 6,
   dadurch gekennzeichnet, daß die Betriebsfrequenz der Eigenresonanzfrequenz der Sekundärwicklungsanordnung entspricht .

8. Leistungsgenerator nach einem der Ansprüche 2 bis 7,
   dadurch gekennzeichnet, daß eine zusätzlicher, mit der Sekundär-Wicklungsanordnung ($L_{21}$, $L_{22}$) induktiv gekoppelter Parallelresonanzkreis ($L_3$, $C_3$) vorgesehen ist, der so bemessen ist, daß die Sekundär-Wicklungsanordnung bei der Betriebsfrequenz eine Parallelresonanz aufweist.

9. Leistungsgenerator nach Anspruch 8,
   dadurch gekennzeichnet, daß die zusätzliche Wicklung durch eine Folie gebildet wird, die an einem Punkt geerdet ist und um eine der beiden Wicklungsanordnung gewickelt ist und diese elektrostatisch gegenüber der anderen Wicklungsanordnung abschirmt.

10. Leistungsgenerator nach Anspruch 7,

dadurch gekennzeichnet, daß zu Abstimmzwecken ein ferromagnetischer Körper mit relativ zur Sekundär-Wicklungsanordnung einstellbarer Lage vorgesehen ist.

11. Leistungsgenerator nach Anspruch 1,
dadurch gekennzeichnet, daß die Primär-Wicklungsanordnung an einen Wechselstromerzeuger angeschlossen ist und zu einem Parallelresonanzkreis ergänzt ist, daß die Sekundär-Wicklungsanordnung Teil eines Serienresonanzkreises ist, dessen Kennwiderstand wesentlich größer ist als der Widerstand der daran angeschlossenen Last.

12. Leistungsgenerator nach Anspruch 1,
gekennzeichnet durch seine Verwendung in einem Hochspannungserzeuger eines Röntgengenerators.

13. Leistungsgenerator nach Anspruch 1,
dadurch gekennzeichnet, daß er einen von einem ferromagnetischen Kern freien Transformator (T) aufweist.

14. Leistungsgenerator nach Anspruch 1,
dadurch gekennzeichnet, daß er einen Transformator (T) mit einem nicht geschlossenen ferromagnetischen Kern (3) aufweist.

## Claims

1. A power generator, comprising a transformer (T) with a primary winding arrangement ($L_1$) and a secondary winding arrangement ($L_2$) which is inductively coupled thereto, the primary winding arrangement forming a resonant circuit in conjunction with a capacitor, a load R being connected to the secondary winding arrangement one winding arrangement ($L_1$) of the transformer forming part of a series resonant circuit whereas the other winding arrangement ($L_2$) forms part of a parallel resonant circuit,
characterized in that

a) the resonance frequency of the series resonant circuit ($L_1$, $C_1$) is lower than the resonance frequency of the parallel resonant circuit ($L_2$, $C_2$),
b) the resonant circuit formed by means of the primary winding arrangement ($L_1$) is connected to an alternating voltage source (1) which generates an essentially sinusoidal alternating current through the primary winding arrangement with an operating frequency in the range of the resonance of the parallel resonant circuit.

2. A power generator as claimed in Claim 1,
characterized in that the primary winding arrangement ($L_1$) forms part of a series resonant circuit ($L_1$, $C_1$) which is connected to the alternating voltage source (1) whose internal resistance is smaller, in an absolute sense, than the impedance of the primary winding arrangement at the operating frequency, and that the secondary winding arrangement ($L_2$) forms part of a parallel resonant circuit.

3. A power generator as claimed in Claim 2 or 3, characterized in that the coupling factor of the magnetic coupling between the primary winding arrangement and the secondary winding arrangement is between 0.1 and 0.9, preferably between 0.2 and 0.8.

4. A power generator as claimed in one of the Claims 2 or 3, characterized in that the characteristic impedance Z of the parallel resonant circuit ($L_2$, $C_2$) is of the order of magnitude of the load resistance R or more.

5. A power generator as claimed in one of the Claims 2 to 4,
characterized in that the secondary winding arrangement comprises a plurality of series-connected sub-windings ($L_{21}$, $L_{22}$).

6. A power generator as claimed in Claim 5,
characterized in that the sub-windings are magnetically coupled to one another.

7. A power generator as claimed in one of the Claims 2 or 6,
characterized in that the operating frequency corresponds to the self-resonance frequency of the secondary winding arrangement.

8. A power generator as claimed in one of the Claims 2 to 7,
   <u>characterized in that</u> there is provided an additional parallel resonant circuit ($L_3$, $C_3$) which is inductively coupled to the secondary winding arrangement ($L_{21}$, $L_{22}$) and is proportioned so that the secondary winding arrangement exhibits parallel resonance at the operating frequency.

9. A power generator as claimed in Claim 8,
   <u>characterized in that</u> the additional winding is formed by a foil which is grounded in one point and is wrapped about one of the two winding arrangements so that it electrostatically shields it from the other winding arrangement.

10. A power generator as claimed in Claim 7,
    <u>characterized in that</u> a ferromagnetic member whose position relative to the secondary winding arrangement can be adjusted, is provided for tuning purposes.

11. A power generator as claimed in Claim 1,
    <u>characterized in that</u> the primary winding arrangement is connected to an alternating current generator and is complemented so as to form a parallel resonant circuit, and that the secondary winding arrangement forms part of a series resonant circuit whose characteristic resistance is substantially higher than the resistance of the load connected thereto.

12. A power generator as claimed in Claim 1,
    <u>characterized in that</u> it is used in a high voltage generator of an X-ray generator.

13. A power transformer as claimed in Claim 1,
    <u>characterized in that</u> it includes a transformer (T) without a ferromagnetic core.

14. A power transformer as claimed in Claim 1,
    <u>characterized in that</u> it includes a transformer (T) having a non-closed ferromagnetic core.


**Revendications**

1. Générateur de puissance avec un transformateur (T) avec un agencement d'enroulement primaire ($L_1$) et un agencement d'enroulement secondaire ($L_2$) couplé de manière inductive à celui-ci, l'agencement d'enroulement primaire formant avec un condensateur un circuit de résonance, une charge R étant raccordée à l'agencement d'enroulement secondaire, un agencement d'enroulement ($L_1$) du transformateur faisant partie d'un circuit de résonance en série et l'autre agencement d'enroulement ($L_2$) faisant partie d'un circuit de résonance parallèle, caractérisé en ce

   a) que la fréquence de résonance du circuit de résonance en série ($L_1$, $C_1$) est inférieure à la fréquence de résonance du circuit de résonance parallèle ($L_2$, $C_2$), et
   b) que le circuit de résonance formé par l'agencement d'enroulement primaire ($L_1$) est raccordé à une source de tension alternative (1) qui produit un courant alternatif essentiellement sinusoïdal par l'agencement d'enroulement primaire avec une fréquence de fonctionnement de l'ordre de la résonance du circuit de résonance parallèle.

2. Générateur de puissance selon la revendication 1, caractérisé en ce que l'agencement d'enroulement primaire ($L_1$) fait partie d'un circuit de résonance en série ($L_1$, $C_1$) qui est raccordé à la source de tension alternative (1) dont la résistance interne est inférieure par sa valeur à l'impédance de l'agencement d'enroulement primaire à la fréquence de fonctionnement et en ce que l'agencement d'enroulement secondaire ($L_2$) fait partie d'un circuit de résonance parallèle.

3. Générateur de puissance, selon l'une des revendications 2 ou 3,
   caractérisé en ce que le coefficient de couplage du couplage magnétique entre l'agencement d'enroulement primaire et l'agencement d'enroulement secondaire se situe entre 0,1 et 0,9, de préférence entre 0,2 et 0,8.

4. Générateur de puissance selon l'une des revendications 2 ou 3, caractérisé en que l'impédance nominale Z du circuit de résonance parallèle ($L_2$, $C_2$) est de l'ordre de grandeur de la résistance de charge R, voire supérieure.

**5.** Générateur de puissance selon l'une des revendications 2 à 4, caractérisé en ce que l'agencement d'enroulement secondaire comporte plusieurs enroulements partiels ($L_{21}$, $L_{22}$) montées en série.

**6.** Générateur de puissance selon la revendication 5, caractérisé en ce que les enroulements partiels sont couplés magnétiquement l'un à l'autre.

**7.** Générateur de puissance selon l'une des revendications 2 ou 6, caractérisé en ce que la fréquence de fonctionnement correspond à la fréquence de résonance propre de l'agencement d'enroulement secondaire.

**8.** Générateur de puissance selon l'une des revendications 2 à 7, caractérisé en ce qu'un circuit de résonance parallèle ($L_3$, $C_3$) couplé de manière inductive à l'agencement d'enroulement secondaire ($L_{21}$, $L_{22}$) est prévu et dimensionné de telle sorte que l'agencement d'enroulement secondaire présente une résonance parallèle à la fréquence de fonctionnement.

**9.** Générateur de puissance selon la revendication 8, caractérisé en ce que l'enroulement supplémentaire est formé par une feuille qui est mise à la terre à un point et est enroulée autour d'un des deux agencements d'enroulement et les protège électrostatiquement par rapport à l'autre agencement d'enroulement.

**10.** Générateur de puissance selon la revendication 7, caractérisé en ce qu'un corps ferromagnétique avec une position réglable par rapport à l'agencement d'enroulement secondaire est prévu à des fins de syntonisation.

**11.** Générateur de puissance selon la revendication 1, caractérisé en ce que l'agencement d'enroulement primaire est raccordé à un générateur de tension alternative et est complété en un circuit de résonance parallèle, que l'agencement d'enroulement secondaire fait partie d'un circuit de résonance en série dont la résistance nominale est essentiellement supérieure à la résistance de la charge qui lui est raccordée.

**12.** Générateur de puissance selon la revendication 1, caractérisé par sa mise en oeuvre dans un générateur de haute tension d'un générateur de rayons X.

**13.** Générateur de puissance selon la revendication 1, caractérisé en ce qu'il présente un transformateur (T) exempt d'un noyau ferromagnétique.

**14.** Générateur de puissance selon la revendication 1, caractérisé en ce qu'il présente un transformateur (T) avec un noyau (3) ferromagnétique non fermé.

FIG.1

FIG.2

FIG.3

FIG.4

FIG.5